# EUROPEAN PATENT APPLICATION

(11) **EP 2 979 583 A1**
(43) Date of publication of application: **03.02.2016**
(21) Application number: 13880007.3
(22) Date of filing: 28.03.2013
(51) Int. Cl.: A47C 7/38, B60N 2/48

(54) **SEAT FOR VEHICLE**

(71) Applicant: Johnson Controls Technology Company, Holland, MI 49423 (US)
(72) Inventor: ABE, Yuichiro, Yokohama-shi Kanagawa 220-0012 (JP); IWASAKI, Shigeyuki, Sagamihara-shi Kanagawa 252-0231 (JP); IINO, Masashi, Sagamihara-shi Kanagawa 252-0231 (JP)
(74) Representative: Liedhegener, Ralf
(86) International application number: PCT/JP2013/059266
(87) International publication number: WO 2014/155606

(57) **Abstract**

A holder (5) includes a stay lock member (8, 14) capable of locking a vertical movement of a headrest stay (3) at an appropriate vertical position by engaging with an engagement portion (3a) of the headrest stay (3). The stay lock member (8, 14) includes a flexible holder (14) having a nail portion (14a) engageable with the engagement portion (3a) along a circumferential direction of the headrest stay (3) as the flexible holder (14) moves in a lower direction and separable from the engagement portion (3a) as the flexible holder (14) moves in an upper direction, and an operation member (8) capable of moving the flexible holder (14) in any of the upper and lower directions.

## Description

### TECHNICAL FIELD

The present invention relates to a seat for a vehicle, particularly, to a structure of a headrest support portion of a seat for a vehicle.

### BACKGROUND ART

There is a headrest support device as a structure that holds a headrest of a seat mounted in a vehicle, for instance, an automobile at a certain position in a vertical direction. This headrest support device can be reliably stopped at the certain position in the vertical direction, and has low sliding resistance in order to be movable either upward or downward. Also, Patent Literature 1 proposes a headrest support device in which play is provided between parts so as to absorb a manufacturing error.

### CITATION LIST

### PATENT LITERATURE

Patent Literature 1: Japanese Patent No. 3316839

### SUMMARY OF INVENTION

In such related arts, if large play is provided between parts, parts in the headrest support device may hit each other and cause hitting sound (also called backlash sound) as the automobile runs. On the other hand, if small play is provided between parts, the sliding resistance is so high that handleability of the headrest for vertical position adjustment is poor.

It is an object of the present invention to provide a seat for a vehicle which has good handleability of a headrest for vertical position adjustment and in which no backlash sound occurs.

A seat for a vehicle in accordance with some embodiments includes: a seat back including a frame; a holder bracket supported by the frame; a headrest; a headrest stay extending downward from a lower end of the headrest and being engaged with and supported by the holder bracket, the headrest stay having an engagement portion formed along a direction perpendicular to a longitudinal direction of the headrest stay; and a holder supporting the headrest stay inserted in the holder. The holder includes a stay lock member capable of locking a vertical movement of the headrest stay at an appropriate vertical position by engaging with the engagement portion of the headrest stay. The stay lock member includes a flexible holder having a nail portion engageable with the engagement portion of the headrest stay along a circumferential direction of the headrest stay as the flexible holder moves in a lower direction and separable from the engagement portion of the headrest stay as the flexible holder moves in an upper direction, and an operation member capable of moving the flexible holder in any of the upper and lower directions.

According to the above-described configuration, operation of the operation member in a release direction causes the flexible holder to move upward and the nail portion is separated from the engagement portion of the headrest stay. Therefore, no sliding resistance of the headrest stay occurs, which provides good handleability of the headrest stay for vertical position adjustment. In addition, operation of the operation member in a stop direction causes the flexible holder to move downward, and the nail portion is engaged with the engagement portion of the headrest stay to tighten the headrest stay around the circumferential surface. Consequently, upward and downward movement of the headrest stay is prevented and no play is provided between parts, and thereby no backlash sound occurs. Thus, a seat for a vehicle with good marketability can be achieved.

The holder may include a conical hole housing the nail portion of the flexible holder, and the conical hole may have an inclined surface bending the nail portion in a direction toward a center of the conical hole in response to a movement of the flexible holder in the lower direction.

According to the above-described configuration, by moving the flexible holder in upward and downward directions, the headrest stay can switch between a movable state and a fixed state.

The nail portion of the flexible holder may be constantly urged in a direction away from the circumferential surface of the headrest stay.

According to the above-described configuration, only by moving the flexible holder upward, the nail portion is surely separated from the engagement portion of the headrest stay, which provides good handleability of the headrest stay for upward and downward movement.

### BRIEF DESCRIPTION OF DRAWINGS

Fig. 1 is a perspective view of a seat back of a seat illustrating a state where a headrest removed from a seat for a vehicle according to an embodiment of the present invention and an engagement portion of a headrest stay.
Fig. 2 is an exploded perspective view of a supporting device of the headless stay of Fig. 1.
Fig. 3 is a top view of a holder seen along arrow A of Fig. 2.
Fig. 4 is a cross-sectional view along line SB-SB of Fig. 3.
Fig. 5 is a cross-sectional view illustrating a state where a flexible holder is moved upward by pushing in an operation member of Fig. 4.
Fig. 6 is a cross-sectional view along line SC-SC of Fig. 3.
Fig. 7 is a cross-sectional view illustrating a means that causes a flexible holder to move upward by pushing in the operation member of Fig. 4.
Fig. 8 is an exploded perspective view of the headrest supporting device illustrated in Figs. 1 to 7.
Fig. 9 is a perspective view of the flexible holder illustrated in Figs. 1 to 7.
Fig. 10 is a perspective view of the flexible holder of Fig. 9, the view seen from the lower side.
Fig. 11 is an enlarged perspective view of the operation member of Fig. 8.
Fig. 12 is an enlarged perspective view of the operation member of Fig. 11, the view seen from the lower side.

### DESCRIPTION OF EMBODIMENTS

The object of providing a seat for a vehicle, which has good handleability of a headrest for vertical position adjustment and in which no backlash sound occurs, has been achieved by the following configuration. Specifically, a seat for a vehicle includes: a seat back including a frame; a holder bracket supported by the frame; a headrest; a headrest stay extending downward from a lower end of the headrest and being engaged with and supported by the holder bracket, the headrest stay having an engagement portion formed along a direction perpendicular to a longitudinal direction of the headrest stay; and a holder supporting the headrest stay inserted in the holder. The holder includes a stay lock member capable of locking a vertical movement of the headrest stay at an appropriate vertical position by engaging with the engagement portion of the headrest stay. The stay lock member includes a flexible holder having a nail portion engageable with the engagement portion of the headrest stay along a circumferential direction of the headrest stay as the flexible holder moves in a lower direction and separable from the engagement portion of the headrest stay as the flexible holder moves in an upper direction, and an operation member capable of moving the flexible holder in any of the upper and lower directions..

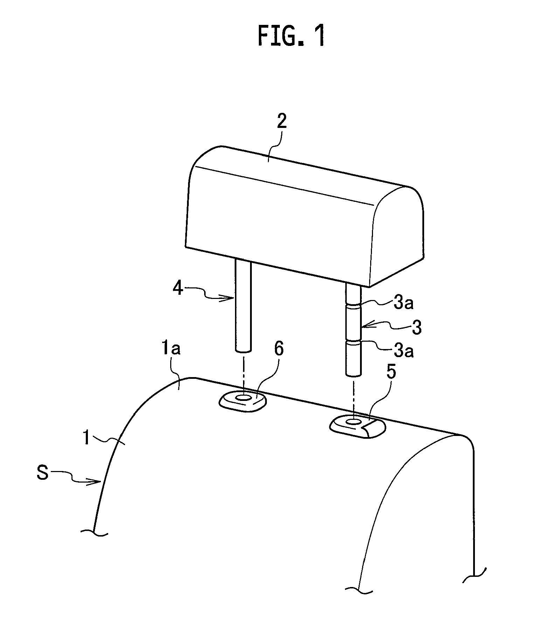

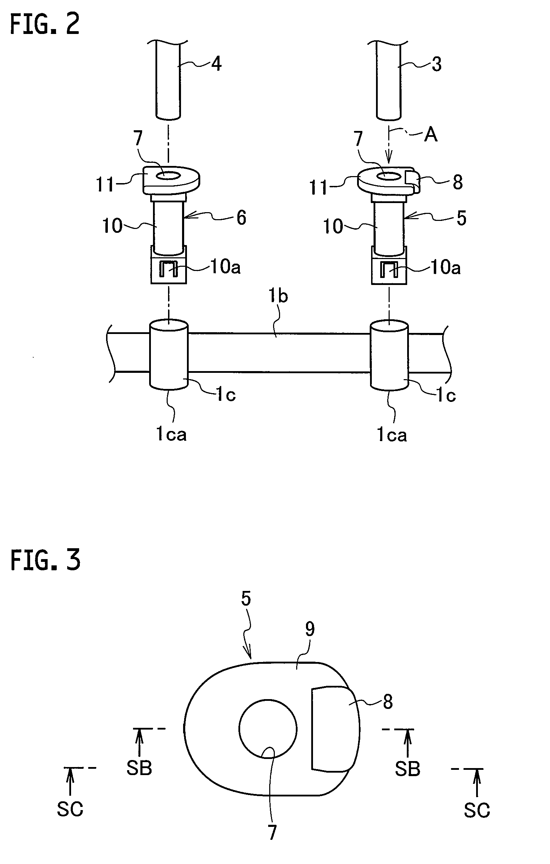

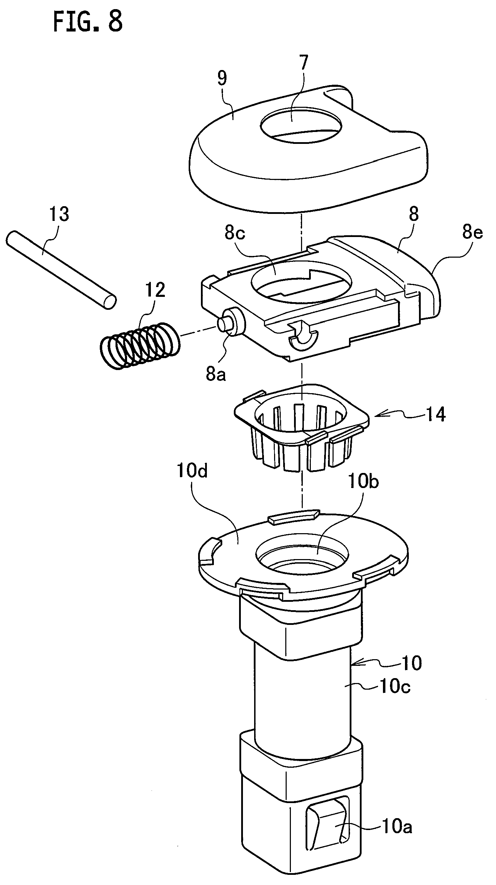

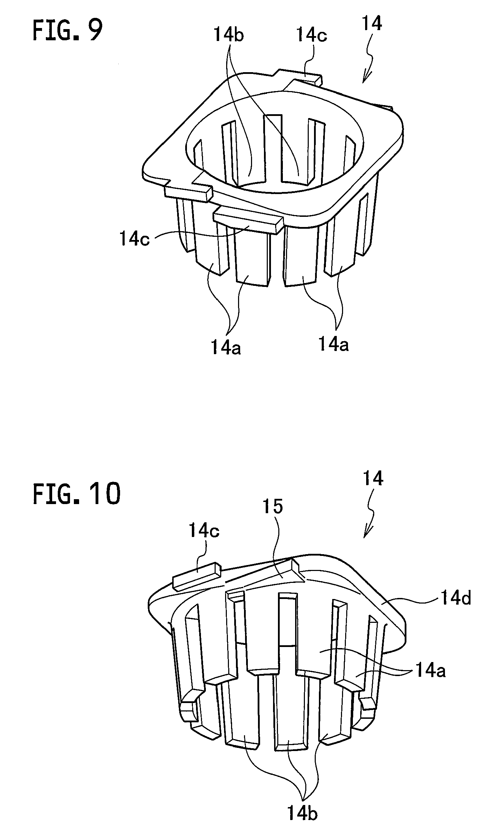

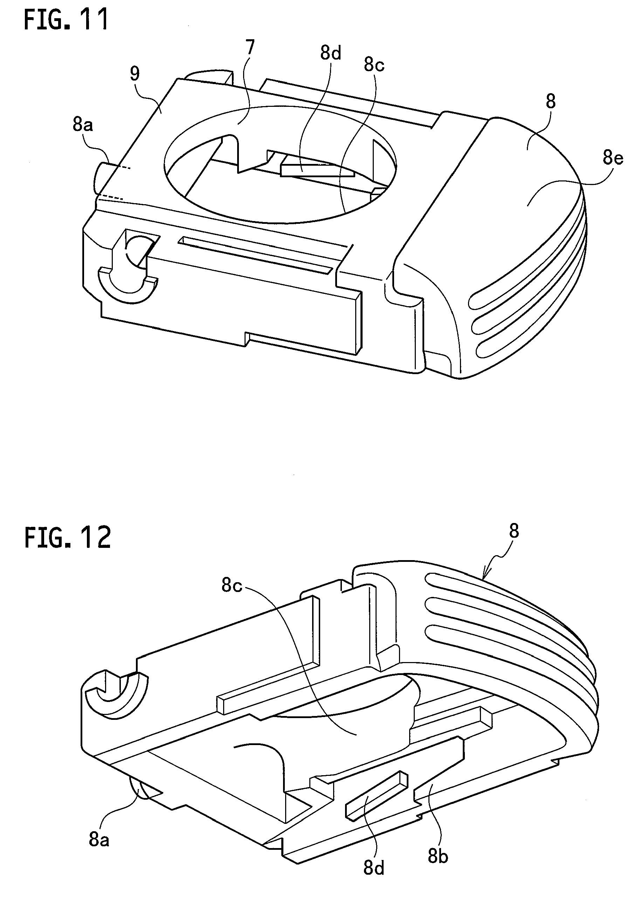

Hereinafter, a vehicle according to an embodiment of the present invention will be described based on Fig. 1 to Fig. 12. The configuration of a seat disposed in a vehicle, for instance, an automobile according to an embodiment of the present invention will be described.

A seat S includes a seat back 1, a headrest 2 that can hold the head of an occupant (not illustrated) from the backside, and cylindrical headrest stays 3 and 4 made of metal. The headrest 2 is supported on a top portion 1a of the seat back 1. The headrest stays 3 and 4 extend down from the headrest 2. In the one headrest stay 3, a plurality of engagement portions 3a are formed at an appropriate vertical interval in a groove shape along a direction perpendicular to the longitudinal direction of the headrest stay 3. The vertical interval of the engagement portions 3a is each range of adjustment for the vertical height of the headrest 2. In the other headrest stay 4, portions equivalent to the engagement portions 3a are not formed.

A holder 5 and a holder 6 are disposed on the top portion 1a of the seat back 1, the holder 5 being a stay lock member that supports the one headrest stay 3, the holder 6 supporting the other headrest stay 4.

The one holder 5 includes a cylinder portion 10, a flexible holder 14, a first head portion 9, an operation member 8, a coil spring 12, and a retaining rod 13. The other holder 6 includes the cylinder portion 10 and a second head portion 11. A stay insertion opening 7 is formed in each of the first head portion 9 and the second head portion 11.

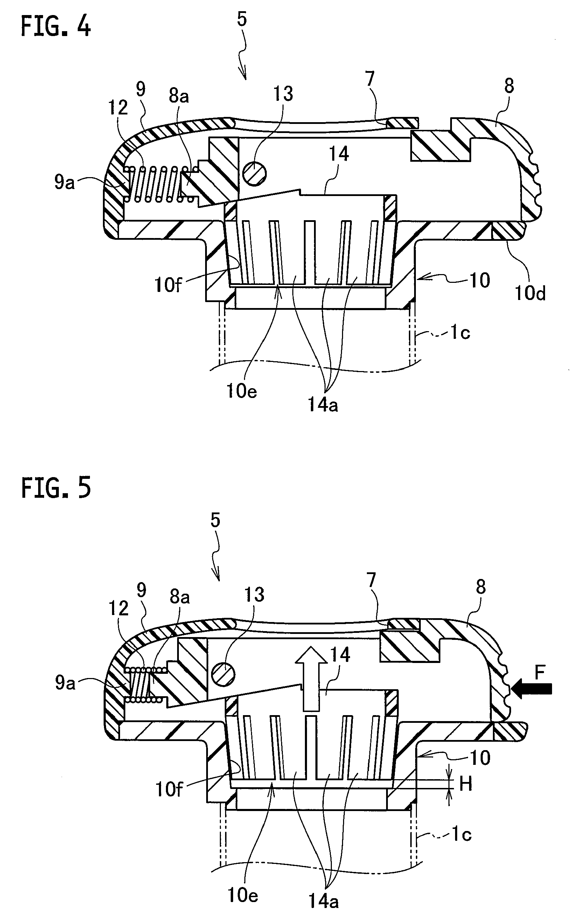

The cylinder portion 10 is integrally formed of a synthetic resin, and includes a body 10c which can be inserted in a holder bracket 1c which is supported by the frame of the seat back 1, an engagement portion 10a which is engageable with a lower end 1ca of the holder bracket 1c, an insertion opening 10b through which the headrest stay 3 is vertically movable smoothly, and a flange 10d which is formed in a brim shape at the upper end of the body 10c. The insertion opening 10b is through from the upper end to the lower end of the body 10c
As illustrated in Figs. 4, 5, on the upper end side of the insertion opening 10b of the cylinder portion 10, a conical hole 10e is provided that has an inclined surface 10f which is inclined inwardly from the upper end to the lower end (in other words, the diameter is tapered toward the lower end). In the conical hole 10e, nail portions 14a (described later) of the flexible holder 14 are housed. The inclined surface 10f of the conical hole 10e is such that as the flexible holder 14 enters deeper (in other words, is located in the downward direction) into the conical hole 10e, the width of the nail portions 14a is narrowed (in other words, the nail portions 14a are bent in the direction toward the center of the conical hole 10e).

The flexible holder 14 is integrally formed of a synthetic resin. The flexible holder 14 is formed in a ring shape through which the headrest stay 3 is vertically movable smoothly and has the brim-shaped flange 14d which can be retained at the upper end of the cylinder portion 10 to prevent further descent. In the flange 14d, tow positioning bars 14c, with which the operation member 8 is to be engaged, are formed, and 12 reed-shaped nail portions 14a are formed which extend down from the flange 14d. On the undersurface of the flange 14d, a guide face 15 having an inclined face is formed. A retaining portion 14b is formed on the inner side of the lowest end of each nail portion 14a. The retaining portion 14b is engageable with the engagement portions 3a which are formed on the circumferential surface of the headrest stay 3. The flexible holder 14 is formed of a synthetic resin in the above description, but may be formed of a spring steel. In short, the nail portion 14a may be formed of any material as long as the nail portion 14a has spring performance.

The first head portion 9 is integrally formed of a synthetic resin. The stay insertion opening 7, through which the headrest stay 3 can be inserted, is formed in the upper surface of the first head portion 9. An opening is formed in the lower side and one of lateral sides. The operation member 8 and the flexible holder 14 are preassembled then fitted in the first head portion 9 through an opening in the lower side. The operation member 8 is inserted in the opening which is formed in one of the lateral sides, in a substantially horizontal direction in a freely advanceable and retreatable manner. In the other of the lateral sides, a first projection portion 8a is formed. A second projection portion 9a is formed at a position opposed to the first projection portion 8a of the operation member 8 with the operation member 8 inserted in the first head portion 9. A coil spring 12 is press-fitted between the first projection portion 8a and the second projection portions 9a to constantly urge the operation member 8 in the right direction of Fig. 4.

The retaining rod 13 is supported by the operation member 8 so that the retaining rod 13 is engageable with each engagement portion 3a of the headrest stay 3. The nail portions 14a of the flexible holder 14 and the retaining rod 13 are both engageable with the engagement portion 3a of the headrest stay 3. However, the nail portions 14a of the flexible holder 14 may be in pressure contact with the circumferential surface of the headrest stay 3 and the retaining rod 13 may be engageable with the engagement portion 3a of the headrest stay 3.

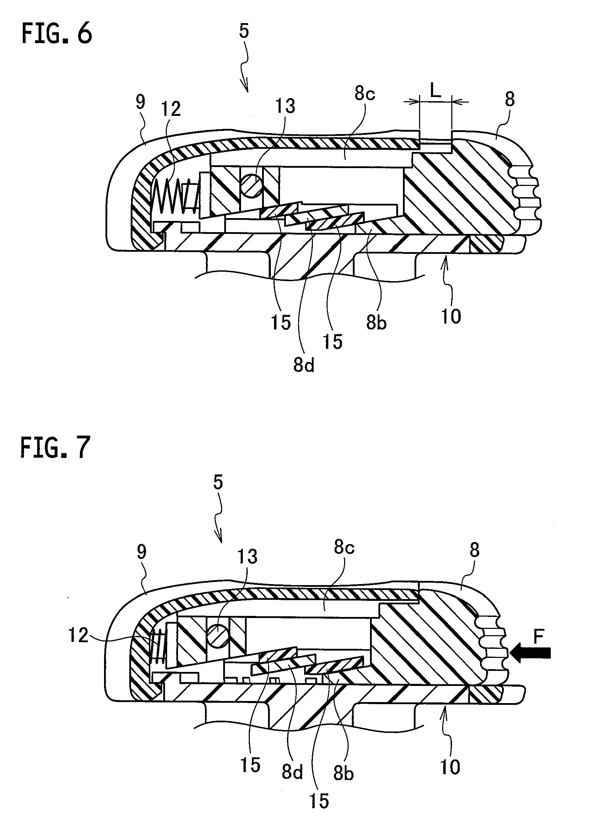

The first head portion 9 and the operation member 8 are supported such that the operation member 8 is constantly pressed by the coil spring 12 and protrudes from the first head portion 9 by dimension L as illustrated in Fig. 6. As illustrated in Fig. 5 and Fig. 7, the operation member 8 is movable by pressing the operation member 8 as indicated by black arrow F until the dimension L becomes zero.

The operation member 8 has a through hole 8c through which the headrest stay 3 is penetrable and which escapes from the headrest stay 3 by a movement margin of the operation member 8. The operation member 8 includes a button 8e via which the operation member 8 is pressed.

The effect of the embodiment of the present invention will be described below.

As indicated by black arrow F illustrated in Fig. 5 and Fig. 7, operation of the operation member 8 in a release direction allows a first pressing member 8b and a second pressing member 8d of the operation member 8 to lift up the guide surface 15 of the flexible holder 14. Thus, the flexible holder 14 is moved upward from the position of Fig. 4 by distance H as indicated by white arrow of Fig. 5. As the flexible holder 14 is moved upward, the inside diameter of the nail portions 14a of the flexible holder 14 increases toward the outer side due to gradual release of inward forcing by the inclined surface 10f of the conical hole 10e. Then, the sliding resistance between the nail portions 14a of the flexible holder 14 and the circumferential surface of the headrest stay 3 decreases. Finally, the nail portions 14a of the flexible holder 14 are separated from the circumferential surface of the headrest stay 3 and play occurs between the nail portions 14a of the flexible holder 14 and the headrest stay 3, and no sliding resistance is present. At this point, the nail portions 14a of flexible holder 14 are separated from the engagement portion 3a of the headrest stay 3. Consequently, the sliding resistance of the headrest stay 3 decreases or disappears, and the operational force is reduced, which allows upward and downward movement of the headrest stay 3. In this manner, only by moving the flexible holder 14 upward, the nail portions 14a are surely separated from the engagement portion 3a of the headrest stay 3, which provides good handleability of the headrest stay 3 for vertical position adjustment. The headrest stay 4 and the holder 6 have originally no sliding resistance therebetween.

Also, in a state (half locked state) where the retaining rod 13 is separated from the engagement portion 3a and the flexible holder 14 and the headrest stay 3 are in contact with each other, the sliding resistance between the flexible holder 14 and the headrest stay 3 is low, and thus the headrest 2 is movable upward and downward to the position of the engagement portion 3a of the headrest stay 3.

Also, with an operation of the operation member 8 in a stop direction, that is, with an operation not in the direction of black arrow F, the urging force of the coil spring 12 causes the flexible holder 14 to move downward. When the flexible holder 14 is moved downward, the nail portions 14a of the flexible holder 14 are forced to be bent inwardly by the inclined surface 10f of the conical hole 10e, and the inside diameter decreases. Then, the nail portions 14a of the flexible holder 14 come into contact with the circumferential surface of the headrest stay 3, and thus the sliding resistance between the nail portions 14a of the flexible holder 14 and the circumferential surface of the headrest stay 3 increases. Finally, the nail portions 14a of the flexible holder 14 are engaged with the engagement portion 3a of the headrest stay 3, and no play is provided between the nail portions 14a of the flexible holder 14 and the headrest stay 3. At this point, the nail portion 14a is engaged with the engagement portion 3a of the headrest stay 3 to tighten the headrest stay 3 around the circumferential surface. Consequently, upward and downward movement of the headrest stay 3 is prevented and no play is provided between parts, and thereby no backlash sound occurs.

Also, only by moving the flexible holder 14 upward, the nail portions 14a are surely separated from the engagement portion 3a of the headrest stay 3, which provides good handleability of the headrest stay 3 for upward and downward movement.

Although the embodiment of the present invention has been described in the above, the present invention is not limited to the above-described embodiment and various modifications are possible.

## Claims

1. A seat for a vehicle, comprising:
a seat back including a frame;
a holder bracket supported by the frame;
a headrest;
a headrest stay extending downward from a lower end of the headrest and being engaged with and supported by the holder bracket, the headrest stay having an engagement portion formed along a direction perpendicular to a longitudinal direction of the headrest stay; and
a holder supporting the headrest stay inserted in the holder,
wherein the holder includes a stay lock member capable of locking a vertical movement of the headrest stay at an appropriate vertical position by engaging with the engagement portion of the headrest stay, and
wherein the stay lock member includes
a flexible holder having a nail portion engageable with the engagement portion of the headrest stay along a circumferential direction of the headrest stay as the flexible holder moves in a lower direction and separable from the engagement portion of the headrest stay as the flexible holder moves in an upper direction, and
an operation member capable of moving the flexible holder in any of the upper and lower directions.

2. The seat for a vehicle according to claim 1, wherein
the holder includes a conical hole housing the nail portion of the flexible holder, and
the conical hole has an inclined surface bending the nail portion in a direction toward a center of the conical hole in response to a movement of the flexible holder in the lower direction.

3. The seat for a vehicle according to claim 1, wherein the nail portion of the flexible holder is constantly urged in a direction away from the circumferential surface of the headrest stay.
